# EUROPÄISCHE PATENTANMELDUNG

(11) **EP 0 534 018 A1**
(43) Veröffentlichungstag der Anmeldung: **31.03.1993**
(21) Anmeldenummer: 91250271.3
(22) Anmeldetag: 04.10.1991
(51) Int. Cl.: F24F 3/06, F24F 7/06

(54) **Klimatisierungsvorrichtung**

(30) Priorität: 24.09.1991 DE 9112065 U
(71) Anmelder: Habeeb, Ragaiy Georg, D-10589 Berlin (DE)
(72) Erfinder: Habeeb, Ragaiy Georg, D-10589 Berlin (DE)
(74) Vertreter: Christiansen, Henning, Dipl.-Ing.

(57) **Zusammenfassung**

Die Erfindung betrifft eine Klimatisierungsvorrichtung, vorzugsweise für das Erzeugen von gekühlter Luft zum Temperieren von Räumen, die einen Kühlkörper (6) und ein Luftantriebsaggregat aufweist, wobei die zu konditionierende Luft durch das Luftantriebsaggregat mit dem Kühlkörper (6) in thermischen Wirkkontakt gebracht wird. Erfindungsgemäß ist das Luftantriebsaggregat als transportabler Ventilator (1) ausgebildet. Der Kühlkörper (6) besteht insbesondere aus einer Mehrzahl von einzelnen, beweglich miteinander verbundenen Kältespeicherelementen (7), die unter Bildung von Durchströmöffnungen (25) für die zu konditionierende Luft im wesentlichen flächig der Form des Schutzgitters (4) des Ventilators (1) angeglichen angeordnet und lösbar an diesem befestigt sind.

## Beschreibung

Die Erfindung betrifft eine Klimatisierungsvorrichtung der im Oberbegriff des Anspruchs 1 angegebenen Art, welche vorzugsweise zur Erzeugung gekühlter Luft verwendbar ist.

In der Klimatisierungstechnik nimmt das Temperieren von Luft neben dem Erzeugen von Luft mit bestimmter Feuchte einen breiten Raum ein. Die temperaturmäßig konditionierten Luftmengen dienen dabei dem Erwärmen oder dem Kühlen eines bestimmten Raumluftvolumens. Die für die Klimatisierung von Räumen benötigte Luft wird außerhalb dieser Räume in sogenannten stationär angeordneten Lüfterzentralen geeignet aufbereitet, indem sie durch Filter, Be- oder Entfeuchter und/oder Wärmetauscher unterschiedlichster Bauart zwangsgeführt wird. Die verwendeten Wärmetauscher bestehen im wesentlichen aus einem starren und quer zur Luftströmung angeordneten Rohrregister, in welchem ein Medienstrom geführt wird, von dem die zu konditionierende Luft entweder eine bestimmte Wärmemenge aufnimmt (Lufterwärmung) oder an den die zu konditionierende Luft eine bestimmte Wärmemenge abgibt (Luftabkühlung).

Aus der DE-OS 38 15 730 ist eine mobile Vorrichtung zum Kühlen von Räumen, Behältern, Kraftfahrzeugen und dgl. bekannt, bei der zur Luftkühlung ein oder mehrere Kältespeicherplatten verwendet werden. Die Kältespeicherplatten bestehen aus einem starren Gehäuse, in dem von einem Kältemittel durchströmte und mit einem Kältemittelkreislauf verbundene Kühlschlangen angeordnet sind und das zusätzlich mit einer eutektischen Lösung gefüllt ist. Um die zu konditionierende und von einem Lüfteraggregat bewegte Luft geeignet temperieren zu können, wird die Luft durch besondere Luftführungskanäle an der Ummantelung der Kältespeicherplatten geführt oder durch Rohre zwischen den Kühlschlangen innerhalb der Kältespeicherplatte geleitet.

Die in DE-OS 38 15 730 vorgeschlagene Lösung ist dahingehend nachteilig, daß sie zum Laden der Kältespeicherplatten zusätzlich ein technisch aufwendiges und damit kostenintensives Kältemittelsystem benötigt. Da der zusätzliche Kältemittelkreislauf baulich in die Kälteplatte integriert werden muß, kann die entsprechende Kälteplatte nur mit erheblichem technologischen Aufwand hergestellt werden. Desweiteren verursacht die vorgeschlagene Luftführung einen großen Strömungswiderstand und erfordert dadurch eine entsprechend große elektrische Leistung zum Betrieb des verwendeten Lüfters. Dadurch ist die vorgenannte Vorrichtung für eine Mehrzahl von Einsatzfällen, bei denen nur einfache Geräte mit ungeregelter Luftkonditionierung erforderlich sind, hinsichtlich der Kosten für Investition und Betriebsführung unbefriedigend.

Ausgehend vom Stand der Technik liegt der Erfindung die Aufgabe zugrunde, eine möglichst einfache Klimatisierungsvorrichtung der eingangs genannten Gattung anzugeben, bei der ein zum Bewegen der zu konditionierenden Luft benutztes Luftantriebsaggregat und ein vom Funktionsprinzip an sich bekannter Kühlkörper konstruktiv so miteinander kombiniert sind, daß ohne bauliche Veränderungen des Luftantriebsaggregat auf einfache Weise eine befriedigende Luftkühlung erreichbar ist. Es ist weiterhin Aufgabe der Erfindung, eine vorteilhafte Bauform für den verwendeten Kühlkörper zu entwickeln.

Diese Aufgabe wird mit den kennzeichnenden Merkmalen des Anspruchs 1 gelöst.

Die Erfindung geht von der Erkenntnis aus, daß ein Luftantriebsaggregat, vorzugsweise ein als transportables Standgerät ausgebildeter Ventilator auf vorteilhafte Weise und auf einfachste Weise als Klimatisierungsvorrichtung betrieben werden kann, wenn der Ventilator mit einem zusätzlichen Kühlkörper ausgerüstet wird.

Dieser Kühlkörper ist erfindungsgemäß an der Luftabströmseite des Ventilators angeordnet und an dem üblicherweise an jedem Ventilator vorhandenen Schutzgitter, durch welches eine Verletzungsgefahr für den Betreiber des Ventilators verhindert werden soll, lösbar befestigt. Der Kühlkörper besteht aus einer Mehrzahl einzelner, mit Wasser oder einer speziellen Kältemischnung gefüllten Kältespeicher, die beweglich miteinander verbunden sind.

Der Kühlkörper besteht bevorzugt aus einem schlauchartigen Gebilde aus Kunststoff, welches auch aus mehreren Elementen zusammengesetzt sein kann, die untereinander beweglich verbunden sind. Der Kühlkörper ist bevorzugt mit einer Flüssigkeit gefüllt, welche bei einer Temperatur unterhalb des Gefrierpunktes von Wasser in den festen Zustand übergeht. Diese Temperatur sollte aber in Gefrierteilen üblicher Haushaltskühlschränke oder in Tiefkühltruhen ohne weiteres erreichbar sein. Der Kühlkörper kann somit in einem Gefrierfach in zusammengelegter Form platzsparend eingefroren werden und wird zur Benutzung auf seine usrprüngliche Größe ausgebreitet, wobei Durchströmöffnungen entstehen, welche die wirksame Oberfläche des Kühlkörpers vergrößern. Der Kühlkörper wird mittels seiner Befestigungsvorrichtungen an dem Schutzgitter des Ventilators befestigt und kann von der bewegten Luft durchströmt werden. Durch die zum Auftauen der der in dem Kühlkörper enthaltenen als Latentspeicher wirkenden Kühlflüssigkeit ergibt sich damit auf einfache Weise ohne erheblichen zusätzlichen Geräteaufwand ein wirksamer und einige Zeit anhaltender Kühleffekt. Die Erfindung kann insbesondere in warmen Ländern eingesetzt werden, in denen herkömmliche Klimaanlagen für breite Bevölkerungskreise nur schwer erschwinglich sind.

Der Kühlkörper ist unter Bildung von Durchströmöffnungen für die temperaturmäßig zu konditionierende Luft im wesentlichen flächig und der Form des Schutzgitters des Ventilators angeglichen an diesem angeordnet. Der Kühlkörper wird zwecks Aufladen der einzelnen Kältespeicher in einem gesonderten Kälteerzeuger, vorzugsweise in dem Gefrierfach eines Haushaltskühlschrankes oder in einer Gefriertruhe auf eine geeignete Temperatur abgekühlt. Um bei diesem Abkühlprozeß das zur Verfügung stehende Kühlraumvolumen des Kälteerzeugers optimal ausnutzen zu können, sind die einzelnen Kältespeicher des Kühlkörpers auf vorteilhafte Weise durch Gelenke miteinander verbunden.

Die einzelnen Gelenkelemente sind dabei an den Stirnseiten der als zylindrische oder quaderförmige Hohlkörper ausgebildeten Kältespeicher angeordnet. Dadurch kann der Kühlkörper auf einfache Weise vorteilhaft durch Zusammenlegen oder durch Zusammenrollen in seinem Gesamtvolumen verringert und dem zum Laden der Kältespeicher zur Verfügung stehenden Raum im separaten Kälteerzeuger geeignet angepaßt werden.

Um den Kühlkörper sicher und gleichzeitig bequem lösbar an den drahtformigen Elementen des Schutzgitters des Ventilators anbringen zu können, tragen die Kältespeicher an ihrer Mantelfläche jeweils einen Befestigungsclip. Dieser Clip ist erfindungsgemäß auf einen an der Mantelfläche des Kältespeichers im wesentlichen mittig angeordneten, pilzähnlichen Knopf aufsteckbar ausgebildet und besitzt die Form einer Spange. Um das Aufstecken des Befestigungsclips zu ermöglichen, besitzt der eine Spangenarm eine der Knopfform angepaßte Ausnehmung. Das geschlossene Ende der, aus einem auch bei Temperaturen unter dem Gefrierpunkt elastischen Material bestehenden Spange ist in seiner Form den äußeren Abmessungen der drahtförmigen Elemente des Ventilatorschutzgitters angepaßt. Das vorab beschriebene Aufstecken ermöglicht auf einfache Weise eine Verdrehbarkeit des Befestigungsclips an der Mantelfläche des Kältespeichers. Durch diese Form der Befestigungsclips sind im Zusammenwirken mit der gelenkigen Verbindung der einzelnen Kältespeicher untereinander wesentliche Vorteile beim Anbringen des Kühlkörpers an das Schutzgitter des Ventilators erreichbar, da die Lage der einzelnen Kälte-speicher des Kühlkörpers auf einfache Weise dem Verlauf der drahtförmigen Elemente des Schutzgitters angeglichen werden kann.

Nach einer bevorzugten Ausführungsform der Erfindung sind die einzelnen Kältespeicher des Kühlkörpers unter Bildung einer Kette miteinander verbunden. Die Verbindung der einzelnen, gleichartig ausgebiildeten Kältespeicher erfolgt durch ein Kugelgelenk. Die Gelenkelemente bestehen aus einer Kugelkalotte und einer, durch einen Zapfen gehaltenen Kugel und sind jeweils an einer der Stirnseiten der Kältespeicher mittig und in Richtung der Längsachse des Költespeichers weisend angeordnet. Die Kugelkalotte besteht dabei vorzugsweise aus mindestens drei schmalen, hakenförmig gebogenen Halteklauen. Das Verbinden der einzelnen Kältespeicher erfolgt durch einfaches Einstecken der Kugel des einen Kältespeichers in die entsprechende Kalotte des nächsten Kältespeichers. Der so gebildete Kühlkörper kann auf einfache Weise in Form einer Spirale am Schutzgitter des Ventilators befestigt werden. Das Einsteckprinzip bei der Bildung der Kugelgelenkverbindung ist auch dahingehend vorteilhaft, daß die Länge der Kette der Ventilatorgröße auf einfache Weise angeglichen werden kann. Durch den Abstand der einzelnen Windungen der Spirale und die Distanz zwischen den in einer Kette verbundenen Kältespeichern sind in ausreichendem Maße Durchströmöffnungen für die zu konditionierende Luft vorhanden, so daß sich der Strömungswiderstand der gesamten Anordnung nur unwesentlich gegenüber dem bei Betrieb des Ventilators ohne Kühlkörper erhöht.

Nach einer weiteren vorteilhaften Ausführungsform der Erfindung ist der aus einer Mehrzahl von Kältespeichern bestehende Kühlkörper als flache, mattenartige Matrix ausgebildet, bei der die in einer Reihe befindlichen Kältespeicher miteinander gelenkig verbunden sind. Gleichzeitig sind die an den Enden einer Reihe angeordneten Kältespeicher mit den entsprechenden Kältespeichern der jeweils darunter oder darüberliegenden Reihe an ihrer außen liegenden Stirnseite gelenkig verbunden. Die stirnseitig angeordneten Gelenke der innerhalb der Reihe liegenden Kältespeicher bestehen aus bandartigen, jeweils eine zylindrische Bohrung aufweisenden Laschen, die mittels eines zwei Zapfen tragenden Zusatzteils miteinander verbunden sind. Die Gelenkverbindungen der Kältespeicher an den beiden Außenseiten der Matrix bestehen aus schmalen Bändern, deren Enden quer zur Längsachse der jeweiligen Kältespeicher verlaufend angelenkt sind und in ihrer Mitte zusätzlich gelenkig ausgebildet sind. Die Kühlkörpermatrix ist dadurch auf einfache Weise durch Zusammenschieben oder Auseinanderziehen in ihrer Höhe auf einfache Weise veränderbar und gleichzeitig durch Zusammenklappen in ihrer Breite reduzierbar. Dies ist sowohl für die Anpassung des Kühlkörpers an die Form des Schutzgitters des Ventilators als auch für die Volumenanpassung des Kühlkörpers an den zur Verfügung stehenden Raum in dem zur Unterkühlung der einzelnen Kältespeicher benutzten separaten Kälteaggregat besonders nützlich.

In einer Weiterbildung der vorgenannten Ausführungsform der Erfindung bestehen die einzelnen Reihen der Matrix jeweils aus einem einzigen, langgestreckten Kältespeicher. Die einzelnen Reihen sind in der vorgenannten Art und Weise gelenkig miteinander verbunden. Um sich an die Form des Ventilatorschutzgitters besser anpassen zu können, weist die Mittelachse der Kältespeicher in einer Ebene eine leichte, im wesentlichen bogenförmige Krümmung auf.

Die Kältespeicher des Kühlkörpers bestehen zwecks kostengünstiger Herstellung aus einem Kunststoff, der auch bei den bei der Kältespeicherung auftretenden tiefen Temperaturen eine ausreichende Elastizität und Schlagfestigkeit besitzt und dadurch eine problemlose Montage auch eines stark unterkühlten Kühlkörpers an dem Schutzgitter des Ventilators ermöglicht.

Um für bestimmte Anwendungsfälle der erfindungsgemäßen Klimatisierungsvorrichtung die Geschwindigkeit des Kälteaustrags aus den Kältespeichern zu erhöhen, sind nach einer Weiterbildung der Erfindung die Kältespeicher aus einem Metall mit einer hohen Wärmeleitzahl, vorzugsweise aus Aluminium, gefertigt. Weitere Vorteile hinsichtlich der Verbesserung des Wärmeaustrags sind mit Kältespeichern erreichbar, deren Mantelflächen eine gewellte Struktur aufweisen oder die an ihren Mantelflächen großflächige Kühlrippen tragen.

Energieökonomische Vorteile für den Betrieb der Klimatisierungsvorrichtung sind erzielbar, wenn das Aufladen der Kältespeicher des Kühlkörpers in einer, vorzugsweise transportablen, gut isolierten Kältebox erfolgt, die mit einer thermoelektrischen Wärmepumpe ausgerüstet ist. Die Elektroenergieversorgung der Kühlbox, deren Kühlraumvolumen durch einen klappbar angelenkten Deckel verschließbar und in seinen Abmessungen den Außenmaßen des zusammengelegten Kühlkörpers angepaßt ist, erfolgt über ein geeignet dimensioniertes Solarpanel.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine schematisierte Darstellung der Luftantriebseinrichtung der erfindungsgemäßen Klimatisierungsvorrichtung,
- Figur 2: eine bevorzugte Ausführungsform eines erfindungsgemäßen Kühlkörpers für die Klimatisierungsvorrichtung in schematisiert dargestellter Draufsicht,
- Figur 3: eine weitere vorteilhafte Ausführungsform des verwendeten Kühlkörpers in schematisiert dargestellter Draufsicht,
- Figur 4: die schematisierte Darstellung eines mit der bevorzugten Ausführungsform des Kühlkörpers ausgerüsteten Ventilatorschutzgitters als Vorderansicht,
- Figur 5: die schematisierte Darstellung eines Ventilatorschutzgitters mit einer weiteren vorteilhaften Ausführungsform des Kühlkörpers,
- Figur 6: eine vorteilhafte Ausführungsform eines Kältespeichers in Vorderansicht,
- Figur 7: eine Seitenansicht des in Figur 6 dargestellten Kältespeichers,
- Figur 8: eine weitere Ausführungsform eines Kältespeichers in Vorderansicht,
- Figur 9: eine Seitenansicht des in Figur 8 dargestellten Kältespeichers,
- Figur 10: die Detaildarstellung einer Gelenkverbindung zwischen einzelenen Kältespeichern,
- Figur 11: die Detaildarstellung eines an einem Kältespeicher angeordneten Befestigungsclips,
- Figur 12: die Rückansicht des in Figur 11 dargestellten Befestigungsclips,
- Figur 13: die Seitenansicht einer vorteilhaften Weiterbildung des in Figur 6 dargestellten Kältespeichers
sowie
- Figur 14: den schematisiert dargestellten Querschnitt durch eine zum Laden des Kühlkörpers benutzten Kältebox.

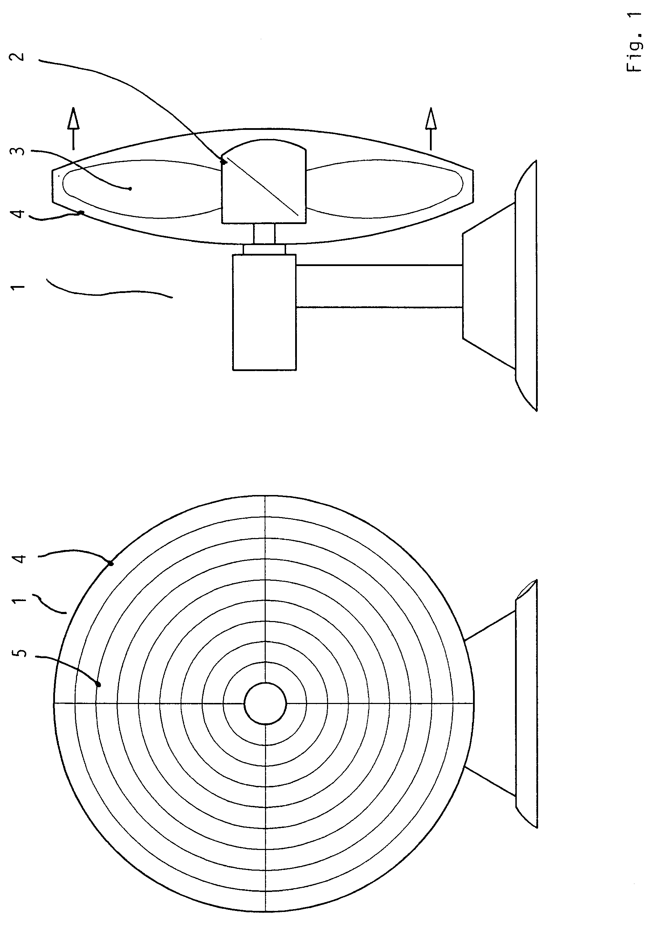

Die in Figur 1 schematisiert in Vorderansicht und als Seitenansicht dargestellte Luftantriebseinrichtung der erfindungsgemäßen Klimatisierungsvorrichtung zur Erzeugung gekühlter Luft besteht aus einem Ventilator 1, der als üblicherweise in Ständerbauweise ausgeführtes Haushaltsgerät bekannt ist. Um Verletzungen bei Betrieb des Ventilators 1 auszuschließen, ist das, mehrere Lüfterflügel 3 aufweisende Lüfterrad 2 von einem Schutzgitter 4 eingehaust. Das Schutzgitter 4 besteht aus einer Vielzahl von drahtartigen Streben 5, die vorzugsweise kreisförmig ausgebildet sind. Die Strömungsrichtung der Luft ist in der Seitenansicht des Ventilators 1 durch Pfeile gekennzeichnet.

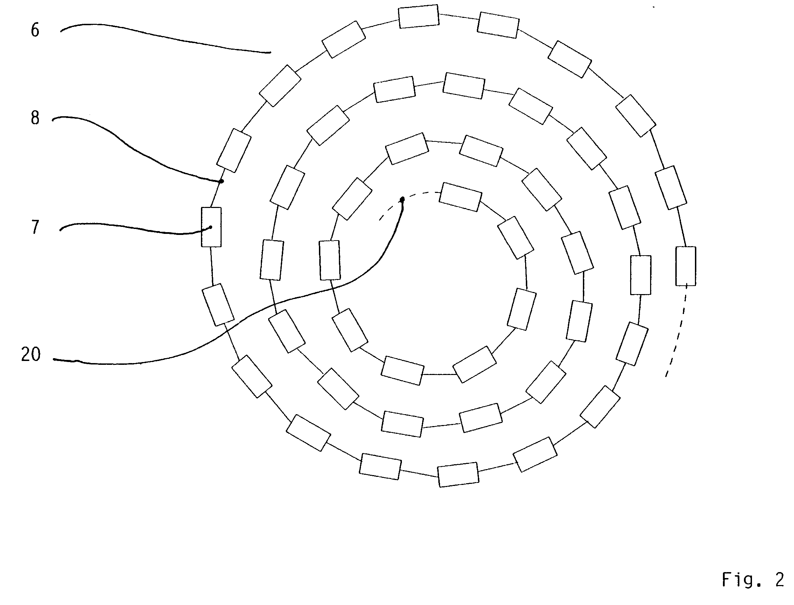

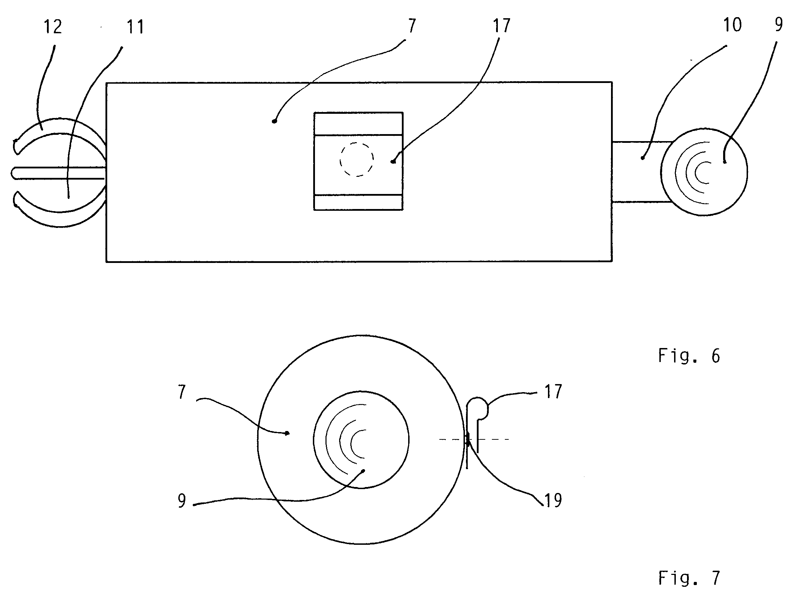

Der Ventilator 1 ist durch Kombination mit einem Kühlkörper 6 zu einer Klimatisierungsvorrichtung auf einfache Weise umrüstbar. Der aus einer Mehrzahl, im wesentlichen gleichartig ausgebildeter Kältespeicher 7 bestehende Kühlkörper 6 ist dabei quer zur Strömungsrichtung der vom Ventilator 1 bewegten Luft an der Abströmseite 24 an dessen Schutzgitter 4 lösbar befestigt. Eine bevorzugte Ausführungsform des Kühlkörpers 6 für die Klimatisierungsvorrichtung ist in Figur 2 als schematisiert dargestellte Draufsicht gezeigt. Die einzelnen Kältespeicher 7 sind in Form einer Kette miteinander verbunden und in Form einer Spirale 20 an dem Schutzgitter 4 des Ventilators 1 angeordnet. Die Verbindung zwischen den Kältespeichern 7 erfolgt durch Kugelgelenke 8 (näher dargestellt in Figur 6), deren einzelne Elemente an den Stirnseiten 22 der als zylindrische oder quaderförmige Hohlkörper ausgebildeten Kältespeicher 7 angeordnet sind. Durch die spiralförmige Anordnung der Kältespeicher 7 entstehen in ausreichender Menge Durchströmöffnungen 25 für die zu kühlende Luft, so daß der Strömungswiderstand der gesamten Anordnung im Verhältnis zum Ventilatorbetrieb ohne Kühlkörper 6 in vorteilhafter Weise nur unwesentlich erhöht wird.

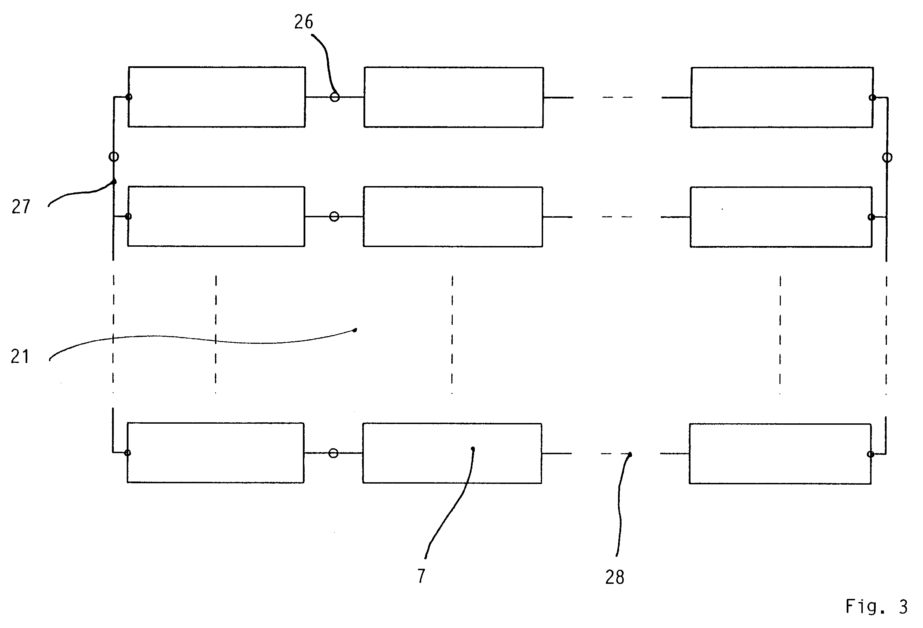

Figur 3 zeigt eine weitere vorteilhafte Ausführungsform des verwendeten Kühlkörpers 6 in schematisiert dargestellter Draufsicht. Der Kühlkörper 6 ist in Form einer flachen, mattenartigen Matrix 21 aufgebaut, die mehrere Reihen 28 aufweist, in denen die Kältespeicher 7, durch Gelenke 26 miteinander verbunden, angeordnet sind. Die Gelenkelemente befinden sich ebenso wie bei dem kettenartig zusammengesetzten Kühlkörper an den Stirnseiten 22 der Kältespeicher 7. Die an den Enden einer Matrixreihe 28 befindlichen Kältespeicher sind an ihren außenliegenden Stirnseiten jeweils durch ein weiteres Gelenk 27 mit den entsprechenden Kältespeichern der direkt darunter bzw. darüberliegenden Matrixreihe verbunden.

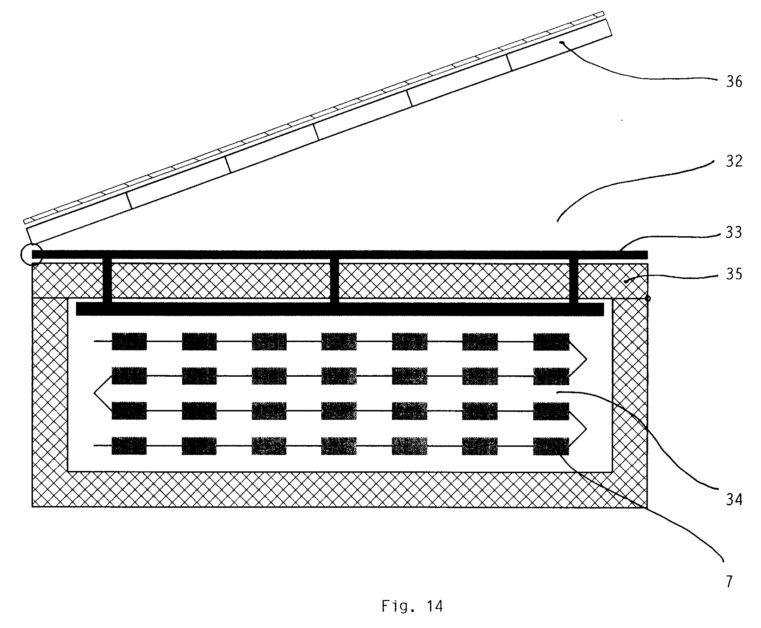

Durch die Gelenkverbindungen der Kältespeicher 7 sind die in Figur 2 und 3 dargestellten Kühlkörper 6 in ihrer Flächenausdehnung auf einfache Weise veränderbar. Der matrixförmige Kühlkörper kann zusammengeschoben, auseinandergezogen oder zusammengeklappt werden. Der spiralartig ausgebildete Kühlkörper kann in seinem Durchmesser variiert werden. Damit ergeben sich beträchtliche Vorteile sowohl bei der Montage des Kühlkörpers 6 an dem Schutzgitter 4 des Ventilators 1, bei der die Form der Streben 5 des Schutzgitters zu berücksichtigen ist, als auch bei der Anpassung des Kühlkörpers 6 an das verfügbare Volumen einer separaten Kälteanlage, in der die Kältespeicher 7 des Kühlkörpers 6 aufgeladen werden müssen. Zum Laden der Kältespeicher 7 des Kühlkörpers 6 ist eine, vorzugsweise transportable Kältebox 32 (dargestellt in Figur 14), die mit einer solarenergiebetreibbaren thermoelektrischen Wärmepumpe 33 ausgestattet ist, von besonderem Vorteil. Das durch einen Deckel 35 verschließbare Kühlraumvolumen 34 der Kältebox 32 ist so dimensioniert, daß eine bestimmte Anzahl zusammengelegter Kühlkörper 6 in ihm unterbringbar sind. Das zur Energieversorgung erforderliche Solarpanel 36 ist gegenüber der Horizontalen in einem bestimmten Winkel neigbar an dem Deckel 35 angeordnet.

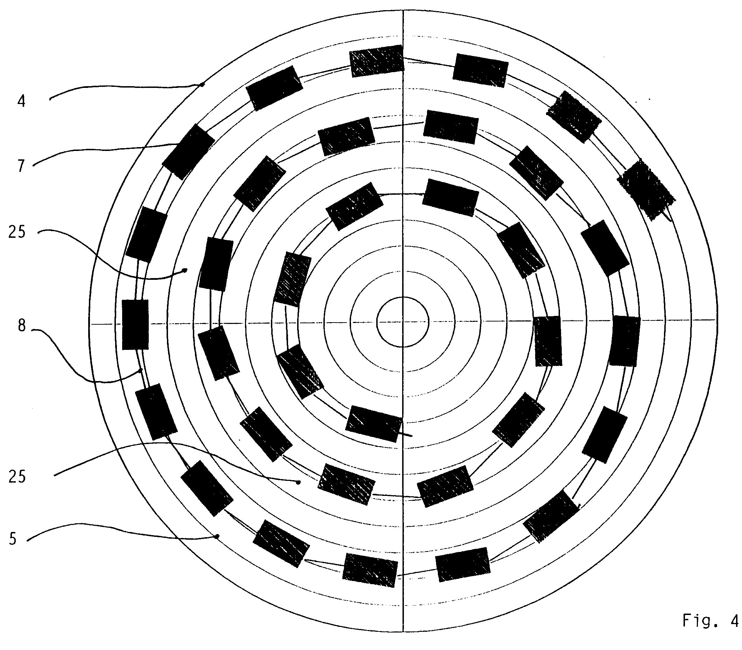

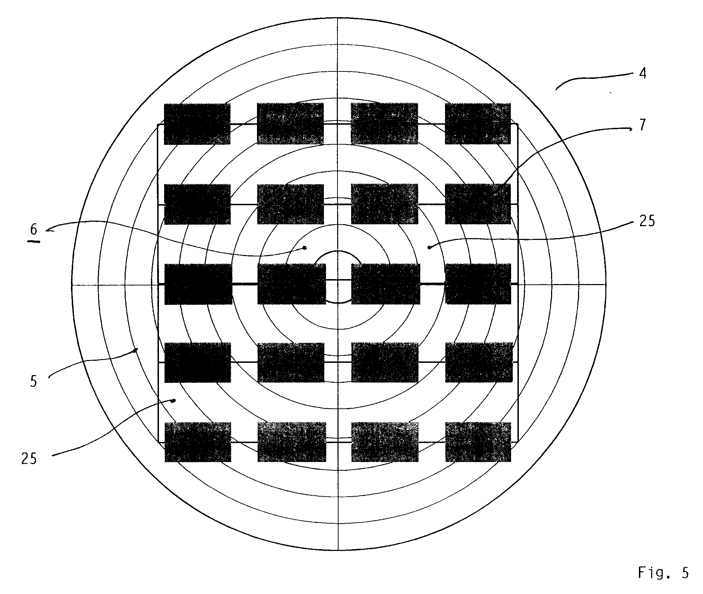

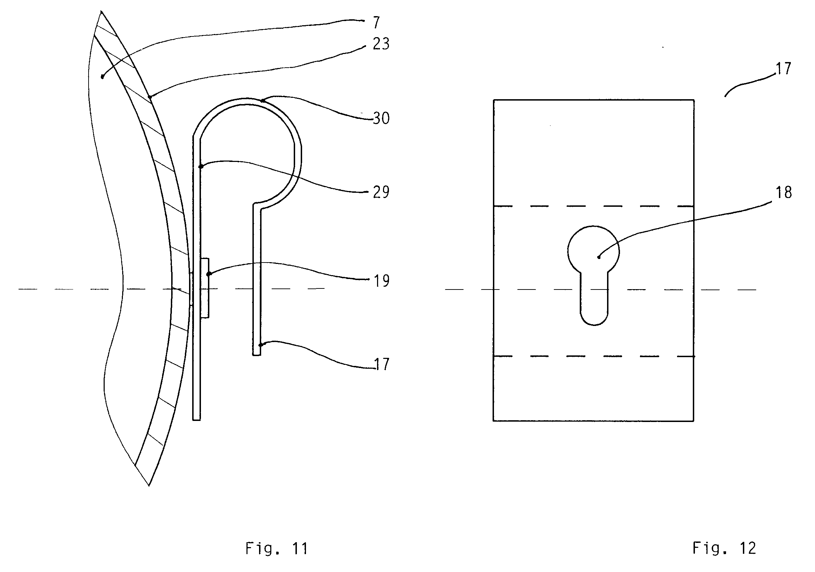

Figur 4 und Figur 5 zeigen die schematisierte Darstellung eines mit den vorab genannten Ausführungsformen des Kühlkörpers 6 ausgerüsteten Ventilatorschutzgitters 4 als Vorderansicht. Sowohl der als Spirale 20 als auch der als Matrix 21 ausgebildete Kühlkörper 6 besitzt in ausreichendem Maße Berührungspunkte mit den Streben 5 des Schutzgitters 4, um die erforderliche Befestigung der Kältespeicher 7 vornehmen zu können. Die Befestigung erfolgt mittels drehbarer Befestigungsclips 17 (näher dargestellt in den Figuren 11 und 12). Die durch die Gelenkverbindungen mögliche relative Beweglichkeit der Kältespeicher 7 innerhalb des Kühlkörperverbandes sichert, daß stets ein günstiger Befestigungspunkt für die einzelnen Kältespeicher ohne besondere Mühe gefunden werden kann. Dabei ist es von besonderem Vorteil, daß es nicht unbedingt erforderlich ist, jeden Kältespeicher 7 des Kühlkörpers 6 mit dem Schutzgitter 4 zu verbinden.

Der in den Figuren 6 und 7 in Vorder- und Seitenansicht schematisiert dargestellte zylindrischen Kältespeicher 7 weist an seinen gegenüberliegenden Stirnseiten 22 die Gelenkelemente eines Kugelgelenks 8 auf. Diese bestehen zum einen aus einer Kugelkalotte 11 und einer, an einem Zapfen 10 befestigten Kugel 9. Die Kugelkalotte 11 besitzt mindestens drei, im wesentlichen gleichartig geformte Halteklauen 12, mit denen die Kugel 9 durch Einstecken in Eingriff gebracht wird, wenn die einzelnen Kältespeicher 7 miteinander zu dem Kühlkörper zusammengesetzt werden. An der Mantelfläche 23 des Kältespeichers 7 ist ein Befestigungsclip 17 drehbar angeordnet. Die Drehbarkeit des Befestigungsclips bringt weitere Vorteile für das problem-lose Befestigen des Kühlkörpers 6 an dem Schutzgitter 4 des Lüfters 1. Die Verbindung der Kältespeicher 7 mittels eines Kugelgelenks 8 wird vorzugsweise bei einem spiralförmig ausgebildeten Kühlkörper verwendet.

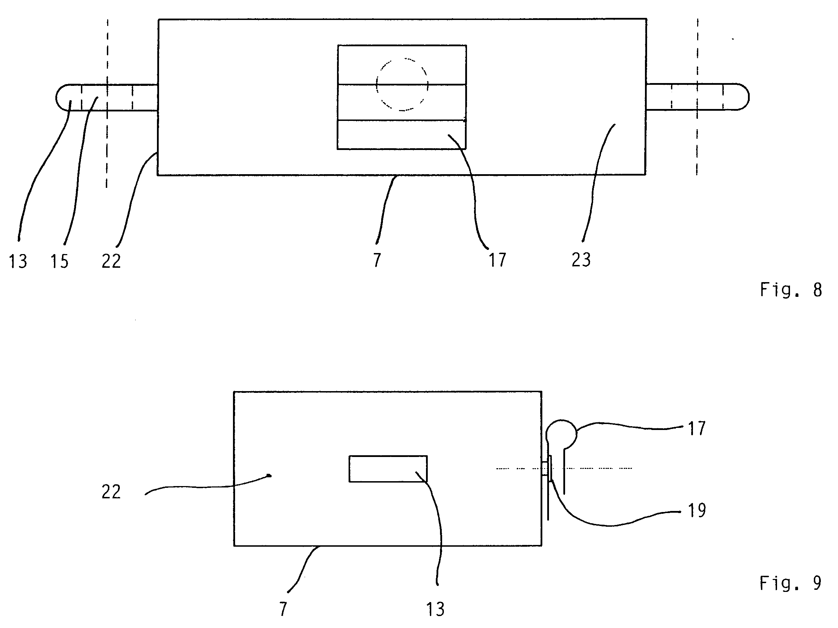

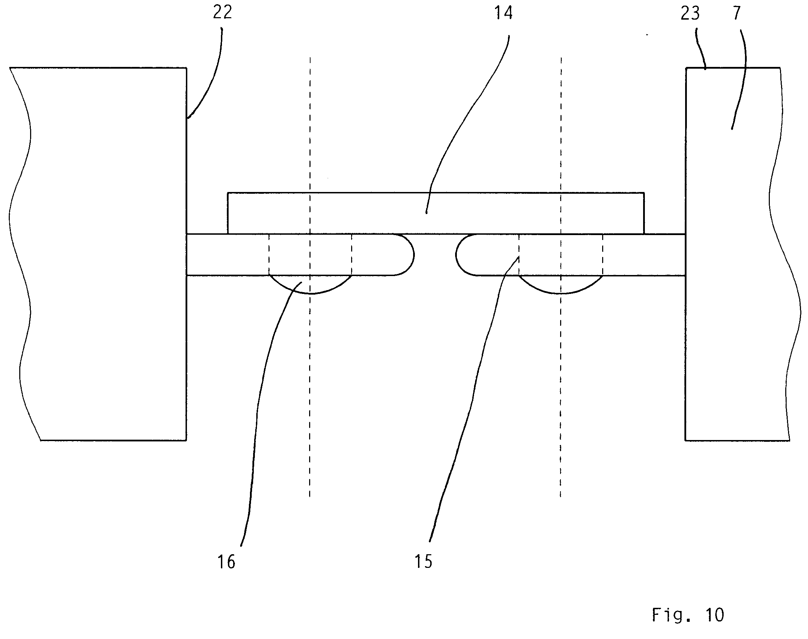

Der in den Figuren 8, 9 und 10 als Vorderansicht, Seitenansicht bzw. als Teilansicht dargestellte quaderförmige Kältespeicher 7 ist mit einem, zwei Drehpunkte aufweisenden Gelenk 26 ausgerüstet. Die Gelenkteile werden durch Laschen 13 gebildet, die an jeder der Stirnseiten des Kältespeichers mittig und in Richtung der Längsachse des Kältespeichers weisend befestigt sind. Die Laschen 13 besitzen jeweils eine zylindrische Bohrung 15, in welche die Zapfen 16 eines Zusatzteils 14 eingreifen und damit die gelenkige Verbindung zwischen den Kältespeichern 7 herstellen. Ebenso wie der zylindrische Kältespeicher besitzt auch der quaderförmig ausgebildete Kältespeicher an seiner Mantelfläche 23 einen drehbar angeordneten Befestigungsclip 17. Die Verbindung der Kältespeicher 7 mit einem zwei Drehpunkte aufweisenden Gelenk 26 ermöglicht auf vorteilhafte Weise ein Zusammenklappen eines als Matrix ausgebildeten Kühlkörpers, wenn dieser zwecks Aufladen der einzelnen Kältespeicher an das dafür verfügbare Volumen einer separaten Kälteanlage angepaßt werden muß.

Figur 11 zeigt als Ausschnitt der in Figur 7 dargestellten Seitenansicht eines zylindrischen Kältespeichers eine vorteilhafte Form der Anordnung der Befestigungsclips 17 an der Mantelfläche 23 des Kältespeichers 7. Der Befestigungsclip 17 ist in Form einer zweiarmigen Spange ausgebildet und ist auf einen an der Mantelfläche 23 des Kältespeichers 7 in geeigneter Weise befestigten, pilzförmigen Knopf 19 aufgesteckt. Zu diesem Zweck besitzt ein Spangenarm eine sich von oben nach unten verjüngende Ausnehmung 18 (dargestellt in Figur 12), durch welche der Knopf 19 beim Anbringen des Befestigungsclips 17 gesteckt wird. Der Schaft des pilzförmigen Knopfes 19 dient gleichzeitig als Drehachse für den Befestigungsclip 17. Diese Beweglichkeit ist für ein einfaches Befestigen der einzelnen Kältespeicher 7 des Kühlkörpers 6 von besonderem Vorteil.

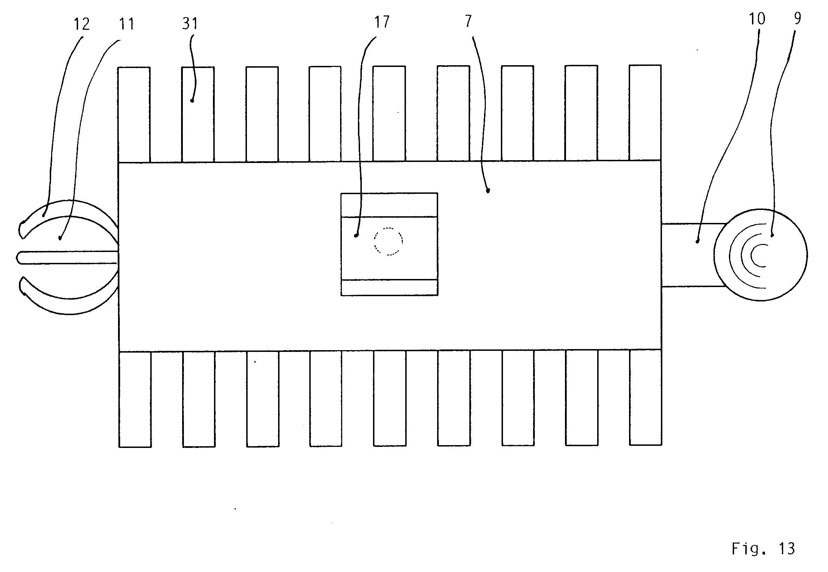

Die Kältespeicher 7 werden aus einem, auch bei tiefen Temperaturen eine ausreichende Elastizität aufweisenden Kunststoff hergestellt. Um den Kälteaustrag aus den Kältespeichern 7 zu beschleunigen, ist es von Vorteil, die Kältespeicher aus einem metallischen Werkstoff mit guter Wärmeleitung herzustellen. Als kostengünstiges Material ist Aluminium dazu besonders geeignet. Eine weitere Verbesserung des Kälteaustrags ist erzielbar, wenn die Mantelfläche 23 der Kältespeicher 7 eine gewellte Oberfläche aufweist oder mit Kühlrippen 31 versehen ist. Eine entsprechende Ausführungsform ist in Figur 13 dargestellt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Klimatisierungsvorrichtung, vorzugsweise zum Erzeugen von gekühlter Luft zum Temperieren von Räumen, die einen Kühlkörper für ein Luftantriebsaggregat aufweist, wobei die zu konditionierende Luft durch das Luftantriebsaggregat mit dem Kühlkörper in thermischen Wirkkontakt gebracht wird,
**dadurch gekennzeichnet,**
- daß der Kühlkörper (6) mit Befestigungsmitteln (17) für ein, vorzugsweise an der Luftabströmseite (24) angeordnetes Schutzgitter (4) des als Ventilator (1) ausgebildeten Luftantriebsaggregats versehen ist und
- daß der Kühlkörper (6) aus mindestens einem Kältespeicherelement (7) besteht, das unter Bildung von mindestens einer Durchströmöffnung (25) für die zu konditionierende Luft im wesentlichen in zweidimensionaler Erstreckung anordbar ist, so daß der Kühlkörper (6) mindestens einen Teil des von der Luft durchströmten Bereichs des Schutzgitters (4) bedeckt.

2. Klimatisierungsvorrichtung nach Anspruch 1, **dadurch gekennzeichnet,** daß das Kältespeicherelement (7) als im wesentlichen zylindrischer oder quaderförmiger Hohlkörper ausgebildet ist, der insbesondere aus einem Metall hoher Wärmeleitfähigkeit, vorzugsweise Aluminium, oder einem Kunststoff besteht, der auch bei niedrigen Temperaturen eine hohe Elastizität aufweist.

3. Klimatisierungsvorrichtung nach einem der vorangehenden Ansprüche, **dadurch gekennzeichnet,** daß das Kältespeicherelement (7) mit Wasser oder mit einer Kältemischung mit einem Gefrierpunkt von vorzugsweise weniger als -10° Celsius gefüllt ist.

4. Klimatisierungsvorrichtung nach einem der vorangehenden Ansprüche, **dadurch gekennzeichnet,** daß das oder mehrere in einer Kette miteinander verbundene Kältespeicherelemente (7) in Form einer Spirale (20) ausgebildet sind.

5. Klimatisierungsvorrichtung nach einem der vorangehenden Ansprüche, **dadurch gekennzeichnet,** daß mehrere Kältespeicherelemente (7) an ihren Enden jeweils durch ein Scharnier- oder Gelenkelement, insbesondere durch ein Kugelgelenk (8), miteinander verbunden sind, wobei insbesondere die Scharnier- oder Gelenkelemente (9 bis 13) jeweils an den Stirnseiten (22) der als Hohlkörper ausgebildeten Kältespeicherelemente (7) mittig und in Richtung der Längsachse des Hohlkörpers weisend angeordnet sind.

6. Klimatisierungsvorrichtung nach Anspruch 5, **dadurch gekennzeichnet,** daß das Gelenkelement an der einen Stirnseite durch eine Kugelkalotte (11) und an der anderen Stirnseite durch eine, durch einen Zapfen (10) gehaltene Kugel (9) ausgebildet ist, wobei die Kugelkalotte (11) insbesondere aus mindestens drei schmalen, hakenförmig gebogenen Halteklauen (12) und/oder die Gelenkelemente aus zwei, mit zylindrischen Bohrungen (15) versehenen und im wesentliche gleichen Laschen (13) bestehen, die durch ein Zapfen (16) aufweisendes Zusatzteil (14) verbindbar ausgebildet sind.

7. Klimatisierungsvorrichtung nach einem der vorangehenden Ansprüche, **dadurch gekennzeichnet,** daß mehrere Kältespeicherelemente (7) in Form einer Matrix (21) angeordnet sind, wobei insbesondere die jeweils in einer Reihe (28) der Matrix (21) angeordneten Kältespeicherelemente (7) und die in den einzelnen Reihen (28) der Matrix (21) jeweils an dem Ende der Reihe (28) angeordneten Kältespeicherelemente (7) mit benachbarten bzw. mit den entsprechenden Kältespeicherelementen (7) der vertikal darüber oder darunter angeordneten Reihe (28) an ihren Stirnseiten (22), insbesondere gelenkig, miteinander verbunden sind.

8. Klimatisierungsvorrichtung nach einem der vorangehenden Ansprüche, **dadurch gekennzeichnet,** daß die Längsachse des Kältespeicherelements (7) eine der Form des Schutzgitters (4) des Ventilators (1) angepaßte Krümmung aufweist.

9. Klimatisierungsvorrichtung nach einem der vorangehenden Ansprüche, **dadurch gekennzeichnet,** daß das Befestigungsmittel (17) als Befestigungsclip oder in sonstiger Weise als eine Strebe (5) des Schutzgitters (4) umgreifende Klammer bzw. Klemme ausgebildet ist, wobei es insbesondere an einem an der Mantelfläche (23) des Kältespeicherelementes (7) befindlichen Knopf (19) durch Aufstecken befestigt ist und/oder der Knopf (19) im wesentlichen pilzförmig ausgebildet ist und/oder daß das Befestigungsmittel (17) um eine senkrecht zur Längsachse des Kältespeicherelementes (7) gerichtete Achse drehbar befestigt ist.

10. Klimatisierungsvorrichtung nach einem der vorangehenden Ansprüche, **dadurch gekennzeichnet,** daß das Befestigungsmittel (17) als im wesentlichen U-förmige Spange mit zwei unterschiedlich langen Spangenarmen ausgebildet ist, wobei insbesondere der längere Spangenarm (29) eine der Form des Knopfes (19) angepaßte Ausnehmung (18) und/oder das geschlossene Ende (30) der U-förmigen Spange eine dem Durchmesser der Schutzgitterstreben (5) angepaßte Querschnittsfläche aufweist.

11. Klimatisierungsvorrichtung nach einem der vorangehenden Ansprüche, **dadurch gekennzeichnet,** daß die Mantelfläche (23) der Kältespeicherelemente (7) mit Mitteln zur Vergrößerung der Oberfläche in Form von Rippen (31) oder Wellen versehen ist.

12. Klimatisierungsvorrichtung nach einem der vorangehenden Ansprüche, **gekennzeichnet durch** eine Kältebox (32) zum Aufladen des Kühlkörpers (6), die mit einer durch Solarenergie betreibbaren thermoelektrischen Wärmepumpe (33) versehen ist.
